# EUROPÄISCHE PATENTSCHRIFT

(11) **EP 3 056 322 B1**
(45) Veröffentlichungstag und Bekanntmachung des Hinweises auf die Patenterteilung: **19.09.2018**
(21) Anmeldenummer: 15003371.0
(22) Anmeldetag: 25.11.2015
(51) Int. Cl.: B25J 9/16

(54) **VERFAHREN UND SYSTEM ZUM BETREIBEN EINER MEHRACHSIGEN MASCHINE, INSBESONDERE EINES ROBOTERS**
METHOD AND SYSTEM FOR OPERATING A MULTI-AXIS MACHINE, IN PARTICULAR A ROBOT
PROCÉDÉ ET SYSTÈME DE FONCTIONNEMENT D'UNE MACHINE MULTIAXIALE, EN PARTICULIER UN ROBOT

(30) Priorität: 11.02.2015 DE 102015001741
(43) Veröffentlichungstag der Anmeldung: 17.08.2016
(73) Patentinhaber: KUKA Deutschland GmbH, 86165 Augsburg (DE)
(72) Erfinder: Munz, Heinrich, 88368 Bergatreute (DE); Leibinger, Josef, 88250 Weingarten (DE)
(74) Vertreter: Schlotter, Alexander Carolus Paul

(56) Entgegenhaltungen:
- EP-A2- 0 742 505
- EP-A2- 2 671 691
- Daniela Steidl ET AL: "Inverse Kinematik Gliederung Motivation", , 30. Juni 2011 (2011-06-30), XP055278710, Gefunden im Internet: URL:https://wwwcg.in.tum.de/fileadmin/user _upload/Lehrstuehle/Lehrstuhl_XV/Teaching/ SS11/Proseminar-PIXAR/Daniela_Steidl_talk. pdf [gefunden am 2016-06-08]
- Anonymous: "Inverse Kinematik - Wikipedia", , 31. Oktober 2014 (2014-10-31), XP055278704, Gefunden im Internet: URL:https://de.wikipedia.org/w/index.php?t itle=Inverse_Kinematik&oldid=135385233 [gefunden am 2016-06-08]
- Anonymous: "Direkte Kinematik - Wikipedia", , 5. Juli 2014 (2014-07-05), XP055279128, Gefunden im Internet: URL:https://de.wikipedia.org/w/index.php?t itle=Direkte_Kinematik&oldid=131886102 [gefunden am 2016-06-09]

## Beschreibung

Die vorliegende Erfindung betrifft ein Verfahren und ein System zum Betreiben einer mehrachsigen Maschine, insbesondere eines Roboters, eine Anordnung mit einem Roboter und dem System sowie ein Computerprogrammprodukt zur Durchführung des Verfahrens.

Aus betriebsinterner Praxis ist es bekannt, in einer Sicherheitssteuerung Ist-Referenzpositionswerte einer maschinenfesten Referenz wie eines TCPs mit vorgegebenen Grenzwerten zu vergleichen, um beispielsweise einen Arbeitsraum eines Roboters zu überwachen. Diese Ist-Referenzpositionswerte ermittelt die Sicherheitssteuerung dabei auf Basis einer sogenannten Vorwärts-Transformation aus erfassten Ist-Achspositionswerten.

Nachteilig erhöht dies den Rechenaufwand in der Sicherheitssteuerung. Zudem muss ein Modell, das der Vorwärts-Transformation zugrunde liegt, vorhanden sein und angepasst werden, wenn sich die Kinematik der Maschine verändert.

Auf der anderen Seite führt eine Maschinensteuerung, die Antriebe der mehrachsigen Maschine steuert, häufig ohnehin eine rechenzeitintensive Rückwärts-Transformation aus, um aus vorgegebenen Soll-Referenzpositionswerten zugehörige Soll-Achspositionswerte zu ermitteln, wobei dieser Rückwärts-Transformation dasselbe Modell zugrunde liegen kann.

Aus der EP 0 742 505 A2 ist eine Einrichtung zum sicherheitsgerichteten Überwachen einer Maschine bekannt, bei der eine höchste Sicherheit dadurch erreicht werden soll, dass auch Zustandsparameter eingeb-, speicher- und ausgebbar sind, dass ferner zwei getrennte Kanalvergleiche vorliegen und bei Abweichungen vorgebbare Fehlerreaktionen anstoßbar sind.

Aufgabe der vorliegenden Erfindung ist es, den Betrieb einer mehrachsigen Maschine zu verbessern.

Diese Aufgabe wird durch ein Verfahren mit den Merkmalen des Anspruchs 1 gelöst. Anspruch 10 stellt ein System zum Betreiben einer mehrachsigen Maschine unter Schutz, das zur Durchführung eines hier beschriebenen Verfahrens eingerichtet ist, Anspruch 11 eine Anordnung mit einem Roboter und einem solchen System zum Betreiben des Roboters, insbesondere zum Überwachen des Roboters und zum Steuern seiner Antriebe, Anspruch 12 ein Computerprogrammprodukt zur Durchführung eines hier beschriebenen Verfahrens. Die Unteransprüche betreffen vorteilhafte Weiterbildungen.

Nach einem Aspekt der vorliegenden Erfindung weist ein System zum Betreiben einer mehrachsigen Maschine, insbesondere eines mehrachsigen Roboters, insbesondere ein System einer Anordnung zum Betreiben eines Roboters der Anordnung, eine Maschinensteuerung zum Steuern von Antrieben der Maschine und eine Sicherheitssteuerung zum Überwachen der Maschine mit einem ersten und einem hierzu redundanten, insbesondere diversitären, zweiten Kanal auf. Der Begriff "mehrachsige Maschine" bedeutet dabei, dass die Maschine zumindest zwei Achsen aufweist, denen jeweils ein Antrieb zugeordnet sein kann. Es versteht sich jedoch, dass die Maschine auch drei, vier, fünf, sechs oder mehr Achse bzw. Antriebe aufweisen kann. Insbesondere kann es sich bei der mehrachsigen Maschine um einen Roboter, insbesondere um einen Industrieroboter, handeln, der genau fünf, sechs, oder sieben Achsen bzw. Antriebe aufweist. Der Begriff diversitär beschreibt dabei insbesondere den Umstand, dass der zweite, diversitäre Kanal eine vom ersten Kanal verschiedene Realisierungstechnik verwendet und zwar hardwaretechnisch und/oder softwaretechnisch. So können beispielsweise in jedem Kanal unterschiedliche elektronische Bauteile, unterschiedliche Arten von Komponenten, und/oder unterschiedliche Schaltkreisdesigns vorgesehen sein. Alternativ oder zusätzlich können unterschiedliche Programme und/oder Programmiersprachenübersetzer (Compiler), beide insbesondere von unterschiedlichen Herstellern, verwendet werden.

Unter einem Steuern wird vorliegend insbesondere die Vorgabe von Soll-Werten an Antriebsregler der Antriebe der Maschine verstanden. Gleichermaßen kann auch ein Regeln, d.h. eine Vorgabe von Soll-Werten auf Basis eines Vergleichs mit erfassten bzw. ermittelten Ist-Werten, verallgemeinernd ein Steuern im Sinne der vorliegenden Erfindung sein. Mithin kann ein Steuern im Sinne der vorliegenden Erfindung insbesondere ein sogenanntes Vorwärtssteuern ("feedforward control") oder ein Regeln ("feedback control") sein. Entsprechend weist das System in einer Ausführung Antriebssteuerungen, insbesondere Antriebsregler, zum Steuern, insbesondere Regeln, der Antriebe der Maschine auf. Diese können Teil der Maschinensteuerung sein oder von dieser Stellgrößen erhalten und auf deren Basis die Antriebe steuern, insbesondere bestromen.

In einer Ausführung weist die Sicherheitssteuerung genau oder wenigstens zwei Kanäle auf. Diese können in einer Ausführung hard- und/oder softwaretechnisch redundant, insbesondere diversitär, ausgebildet sein, insbesondere auf verschiedenen, insbesondere unterschiedlichen, Prozessoren oder Kernen eines Multi-Core-Prozessors implementiert sein, verschiedene, insbesondere unterschiedliche, Datenverbindungen, insbesondere Busse, aufweisen, und/oder verschiedene, insbesondere unterschiedliche, Programme aufweisen bzw. ausführen.

Nach einem Aspekt der vorliegenden Erfindung erhält der erste Kanal erste Eingangs-Soll-Werte und erste Eingangs-Ist-Werte von der Maschinensteuerung, vergleicht erste Vergleichs-Soll-Werte, die von den ersten Eingangs-Soll-Werten abhängen, insbesondere die ersten Eingangs-Soll-Werte sein können, und erste Vergleichs-Ist-Werte, die von den ersten Eingangs-Ist-Werten abhängen, insbesondere die ersten Eingangs-Ist-Werte sein können, miteinander, und löst eine Fehlerreaktion aus, falls eine Abweichung zwischen den ersten Vergleichs-Soll-Werten und ersten Vergleichs-Ist-Werten eine vorgegebene Toleranz übersteigt.

Redundant hierzu, insbesondere parallel und/oder diversitär, erhält der zweite Kanal, insbesondere dieselben, erste(n) Eingangs-Soll-Werte und, insbesondere dieselben, erste(n) Eingangs-Ist-Werte von der Maschinensteuerung, vergleicht erste Vergleichs-Soll-Werte, die von den ersten Eingangs-Soll-Werten abhängen, insbesondere in derselben Weise ermittelt werden wie im ersten Kanal, insbesondere die ersten Eingangs-Soll-Werte sein können, und erste Vergleichs-Ist-Werte, die von den ersten Eingangs-Ist-Werten abhängen, insbesondere in derselben Weise ermittelt werden wie im ersten Kanal, insbesondere die ersten Eingangs-Ist-Werte sein können, miteinander, und löst eine, insbesondere dieselbe, Fehlerreaktion aus, falls eine Abweichung zwischen diesen ersten Vergleichs-Soll-Werten und ersten Vergleichs-Ist-Werten eine vorgegebene, insbesondere dieselbe, Toleranz übersteigt.

Dabei weisen in einer Ausführung die ersten Eingangs-Soll-Werte (Soll-)Referenzpositionswerte einer maschinenfesten Referenz der Maschine und/oder erste und/oder höhere Zeitableitungen hiervon und die ersten Eingangs-Ist-Werte (Ist-)Referenzpositionswerte der maschinenfesten Referenz der Maschine und/oder erste und/oder höhere Zeitableitungen hiervon auf und die Maschinensteuerung ermittelt diese Soll-Referenzpositionswerte und/oder diese Ist-Referenzpositionswerte auf Basis einer Transformation zwischen Referenzpositionswerten der maschinenfesten Referenz und Achspositionswerten der Maschine.

Referenzpositionswerte umfassen in einer Ausführung, insbesondere kartesische, Lage- und/oder Orientierungs- bzw. Winkelkoordinaten bzw. geben in einer Ausführung einen, insbesondere ein-, zwei- oder dreidimensionalen, Abstand und/oder eine, insbesondere ein-, zwei- oder dreidimensionale, Orientierung der maschinenfesten Referenz zu einem, insbesondere maschinen-, werkstück- und/oder umgebungsfesten, Bezugspunkt bzw. -koordinatensystem an. Die maschinenfeste Referenz ist in einer Ausführung der TCP ("Tool Center Point") eines Roboters.

Hierdurch kann in einer Ausführung einerseits die rechenzeitintensive Ermittlung von Referenzpositionswerten auf Basis einer Transformation von der Sicherheits- in die Maschinensteuerung verlagert werden. Dies kann insbesondere eine kompaktere Sicherheitssteuerung ermöglichen. Zusätzlich kann so für diese Transformation ein in der Maschinensteuerung abgelegtes Modell, insbesondere Kinematikdaten wie Achsabstände und dergleichen, der Maschine genutzt werden, das dann vorteilhafterweise nicht mehr in der Sicherheitssteuerung abgelegt und aktuell gehalten werden muss.

Auf der anderen Seite kann die zweikanalige, redundante Überprüfung von Soll- und Ist-Referenzpositionswerten vorteilhafterweise einen sicheren Betrieb der Maschine gewährleisten.

In einer Ausführung ermittelt die Maschinensteuerung die Ist-Referenzpositionswerte, die die ersten Eingangs-Ist-Werte aufweisen, insbesondere sind, auf Basis einer Vorwärts-Transformation zwischen Referenzpositionswerten der maschinenfesten Referenz und erfassten Ist-Achspositionswerten der Maschine. Zusätzlich oder alternativ ermittelt die Maschinensteuerung in einer Ausführung die Soll-Referenzpositionswerte, die die ersten Eingangs-Soll-Werte aufweisen, insbesondere sind, auf Basis einer, insbesondere derselben oder einer unterschiedlichen, Vorwärts-Transformation zwischen Referenzpositionswerten der maschinenfesten Referenz und vorgegebenen Soll-Achspositionswerten der Maschine, beispielsweise, wenn ein Verfahren von Achsen vorgegeben wird. In einer anderen Ausführung ermittelt die Maschinensteuerung die Soll-Referenzpositionswerte, die die ersten Eingangs-Soll-Werte aufweisen, insbesondere sind, auf Basis eines vorgegebenen Steuerprogramms der Maschine, insbesondere mittels Bahnplanung und/oder Interpolation.

In einer Ausführung erhält der erste Kanal zusätzlich zweite Eingangs-Soll-Werte und zweite Eingangs-Ist-Werte, vergleicht zweite Vergleichs-Soll-Werte, die von den zweiten Eingangs-Soll-Werten abhängen, insbesondere die zweiten Eingangs-Soll-Werte sein können, und zweite Vergleichs-Ist-Werte, die von den zweiten Eingangs-Ist-Werten abhängen, insbesondere die zweiten Eingangs-Ist-Werte sein können, miteinander, und löst eine Fehlerreaktion aus, falls eine Abweichung zwischen diesen zweiten Vergleichs-Soll-Werten und zweiten Vergleichs-Ist-Werten eine vorgegebene Toleranz übersteigt

Redundant hierzu, insbesondere parallel und/oder diversitär, erhält der zweite Kanal, insbesondere dieselben, zweite(n) Eingangs-Soll-Werte und, insbesondere dieselben oder unterschiedliche, insbesondere redundante, zweite Eingangs-Ist-Werte, vergleicht zweite Vergleichs-Soll-Werte, die von diesen zweiten Eingangs-Soll-Werten abhängen, insbesondere in derselben Weise ermittelt werden wie im ersten Kanal, insbesondere die zweiten Eingangs-Soll-Werte sein können, und zweite Vergleichs-Ist-Werte, die von diesen zweiten Eingangs-Ist-Werten abhängen, insbesondere in derselben Weise ermittelt werden wie im ersten Kanal, insbesondere die zweiten Eingangs-Ist-Werte sein können, miteinander, und löst eine Fehlerreaktion aus, falls eine Abweichung zwischen diesen zweiten Vergleichs-Soll-Werten und zweiten Vergleichs-Ist-Werten eine vorgegebene, insbesondere dieselbe, Toleranz übersteigt, insbesondere dieselbe Fehlerreaktion wie im ersten Kanal.

Dabei weisen in einer Ausführung die zweiten Eingangs-Soll-Werte (Soll-)Achspositionswerte der Maschine und/oder erste und/oder höhere Zeitableitungen hiervon und die zweiten Eingangs-Ist-Werte (Ist-)Achspositionswerte der Maschine und/oder erste und/oder höhere Zeitableitungen hiervon auf.

Achspositionswerte umfassen in einer Ausführung Gelenkkoordinaten bzw. -stellungen, insbesondere Gelenkwinkel, von einer oder mehreren, insbesondere allen, Bewegungsachsen der mehrachsigen Maschine bzw. geben in einer Ausführung eine Stellung einer Achse relativ zu einer Bezugsstellung bzw. Nulllage an. Die Achspositionswerte sind in einer Ausführung Winkellagen von Antrieben, insbesondere Motoren und/oder mit diesen gekoppelten Getrieben, insbesondere eines Roboters.

In einer Weiterbildung ermittelt die Maschinensteuerung die Soll-Achspositionswerte, die der erste und zweite Kanal von der Maschinensteuerung erhalten und die die zweiten Eingangs-Soll-Werte aufweisen, insbesondere sind, auf Basis einer Rückwärts-Transformation zwischen Soll-Referenzpositionswerten der maschinenfesten Referenz und Achspositionswerten der Maschine.

Hierdurch kann in einer Ausführung die rechenzeitintensive Ermittlung von Referenzpositionswerten auf Basis einer Transformation noch weiter von der Sicherheits- in die Maschinensteuerung verlagert werden. Dies kann insbesondere eine noch kompaktere Sicherheitssteuerung ermöglichen. Zusätzlich kann so auch für diese Transformation ein in der Maschinensteuerung abgelegtes Modell, insbesondere Kinematikdaten wie Achsabstände und dergleichen, der Maschine genutzt werden, das dann vorteilhafterweise ebenfalls nicht mehr in der Sicherheitssteuerung abgelegt und aktuell gehalten werden muss. Auf der anderen Seite kann die zweikanalige, redundante Überprüfung von Soll- und Ist-Achspositionswerten vorteilhafterweise einen sicheren Betrieb der Maschine gewährleisten. In einer Ausführung unterscheiden sich die Vorwärts- und Rückwärtstransformation, die die Maschinensteuerung durchführt, sie können insbesondere auf unterschiedlichen Modellen basieren, um so die Sicherheit zu erhöhen.

In einer Ausführung ermitteln Antriebssteuerungen sogenannte Schleppfehler zwischen vorgegebenen Soll-Achspositionswerten und erfassten Ist-Achspositionswerten und/oder Zeitableitungen hiervon und bestimmen auf Basis dieser Schleppfehler Stellgrößen für die Antriebe, beispielsweise auf Basis einer Kaskaden- und/oder P(I)D-Regelung oder dergleichen. Ein Schleppfehler gibt in einer Ausführung die Differenz zwischen einem Soll- und einem entsprechenden Ist-Wert an: Sollwert = Istwert + Schleppfehler.

Nach einem Aspekt der vorliegenden Erfindung berücksichtigt die Sicherheitssteuerung solche, von den Antriebssteuerungen ermittelte, Schleppfehler beim Vergleich von Soll- und Ist-Werten, da eine Abweichung im Rahmen solcher Schleppfehler systemimmanent ist und somit keinen Fehlerfall anzeigt. Hierdurch kann vorteilhafterweise die Überwachung verbessert werden.

Entsprechend ermittelt in einer Ausführung die Maschinensteuerung erste und/oder zweite Eingangs-Soll-Werte auf Basis von in Antriebssteuerungen ermittelten Schleppfehlern, insbesondere, indem diese Schleppfehler von den Eingangs-Soll-Werten subtrahiert werden, bevor die Sicherheitssteuerung diese erhält (erster/zweiter Eingangs-Soll-Wert, den die Sicherheitssteuerung erhält = auf Basis einer Transformation oder eines Steuerprogramms ermittelter Eingangs-Soll-Wert - Schleppfehler). Analog ermittelt in einer anderen Ausführung die Maschinensteuerung erste und/oder zweite Eingangs-Ist-Werte auf Basis von in Antriebssteuerungen ermittelten Schleppfehlern, insbesondere, indem diese Schleppfehler den Eingangs-Ist-Werten hinzuaddiert werden, bevor die Sicherheitssteuerung diese erhält (erster/zweiter Eingangs-Ist-Wert, den die Sicherheitssteuerung erhält = auf Basis einer Transformation ermittelter oder von einem Erfassungsmittel erhaltener Eingangs-Ist-Wert + Schleppfehler).

In einer anderen Ausführung ermitteln der erste und zweite Kanal der Sicherheitssteuerung redundant, insbesondere parallel und/oder diversitär, erste und/oder zweite Vergleichs-Soll-Werte auf Basis von in Antriebssteuerungen ermittelten Schleppfehlern, insbesondere, indem diese Schleppfehler von den erhaltenen Eingangs-Soll-Werten subtrahiert werden (erster/zweiter Vergleichs-Soll-Wert = von der Maschinensteuerung erhaltener Eingangs-Soll-Wert - Schleppfehler). Analog ermitteln in einer anderen Ausführung der erste und zweite Kanal der Sicherheitssteuerung redundant, insbesondere parallel und/oder diversitär, erste und/oder zweite Vergleichs-Ist-Werte auf Basis von in Antriebssteuerungen ermittelten Schleppfehlern, insbesondere, indem diese Schleppfehler den erhaltenen Eingangs-Ist-Werten hinzuaddiert werden (erster/zweiter Vergleichs-Ist-Wert = von der Maschinensteuerung oder einem Erfassungsmittel erhaltener Eingangs-Ist-Wert + Schleppfehler).

Wenn die ersten und/oder zweiten Vergleichs-Soll- bzw. -Ist-Werte erste oder höhere Zeitableitungen der Referenz- bzw. Achspositionswerte aufweisen, ermittelt in einer Ausführung die Maschinensteuerung entsprechende Zeitableitungen durch, insbesondere numerische, Zeitdifferentiation, wobei der erste und zweite Kanal der Sicherheitssteuerung dann in einer Weiterbildung diese Zeitableitungen zusätzlich oder alternativ zu den Referenz- bzw. Achspositionswerten selber von der Maschinensteuerung erhalten. Hierdurch kann vorteilhaft weitere rechenzeitintensive Verarbeitung von der Sicherheits- in die Maschinensteuerung verlagert werden.

In einer anderen Ausführung ermitteln der erste und zweite Kanal der Sicherheitssteuerung redundant, insbesondere parallel und/oder diversitär, entsprechende Zeitableitungen durch, insbesondere numerische, Zeitdifferentiation, der von der Maschinensteuerung erhaltenen Referenz- bzw. Achspositionswerte. Hierdurch kann vorteilhaft die Sicherheit weiter erhöht werden.

In einer Ausführung erhalten der erste und zweite Kanal von der Maschinensteuerung dieselben ersten und/oder zweiten Eingangs-Soll-Werte und/oder dieselben ersten Eingangs-Ist-Werte. Hierdurch wird in einer Ausführung eine Konsistenzprüfung derselben Daten redundant, insbesondere diversitär, in den beiden Kanälen durchgeführt. Dadurch kann vorteilhaft die Sicherheit weiter erhöht werden.

In einer Ausführung erhalten der erste und zweite Kanal von einem Erfassungsmittel redundant ermittelte zweite Eingangs-Ist-Werte. Das Erfassungsmittel ermittelt, insbesondere erfasst, in einer Ausführung zweite Eingangs-Ist-Werte, insbesondere Ist-Achspositionswerte, redundant, insbesondere diversitär. In einer Weiterbildung weist es jeweils wenigstens zwei verschiedene, insbesondere unterschiedliche, Sensoren zur unterschiedlichen Erfassung des gleichen Ist-Wertes auf. Zusätzlich oder alternativ kann das Erfassungsmittel auch denselben oder unterschiedliche Ist-Werte redundant, insbesondere diversitär, verarbeiten. Hierdurch kann vorteilhaft die Sicherheit weiter erhöht werden.

In einer Ausführung vergleicht das Erfassungsmittel und/oder die Sicherheitssteuerung die redundant ermittelten zweiten Eingangs-Ist-Werte und löst eine Fehlerreaktion aus, falls eine Abweichung zwischen diesen unterschiedlich ermittelten zweiten Eingangs-Ist-Werten eine vorgegebene Toleranz übersteigt.

In einer Ausführung vergleichen der erste und zweite Kanal redundant, insbesondere parallel und/oder diversitär, Vergleichs-Soll-Werte und/oder Vergleichs-Ist-Werte mit, insbesondere veränderlich, vorgegebenen Grenzwerten und lösen jeweils eine, insbesondere dieselbe, Fehlerreaktion aus, falls eine Abweichung zwischen den Vergleichs- und den Grenzwerten eine vorgegebene Toleranz übersteigt.

Auf diese Weise kann zusätzlich zu einer Konsistenzprüfung von Soll- und Ist-Referenz- und/oder Achspositionswerten eine Raum- und/oder Achsüberwachung implementiert werden.

In einer Ausführung führt die Sicherheitssteuerung, insbesondere zyklisch, einen Selbsttest durch und löst eine Fehlerreaktion aus, falls der Selbsttest eine Fehlfunktion ergibt. Hierdurch kann die Sicherheit weiter erhöht werden.

In einer Ausführung weist die Sicherheitssteuerung sichere Eingänge zum Erhalt von externen Fehlersignalen, beispielsweise von einem Not-Aus, Zustimmtaster, Betriebsartenwahlschalter oder dergleichen, auf und löst eine Fehlerreaktion aus, falls sie ein externes Fehlersignal erhält. Dabei kann ein externes Fehlersignal auch ein Wegfall eines externen Fehlerfreisignals umfassen, insbesondere sein. In einer Weiterbildung sind mehrere Eingänge der Sicherheitssteuerung, insbesondere logisch, miteinander verknüpft, so dass die Sicherheitssteuerung eine Fehlerreaktion auslöst, falls sie mehrere externe Fehlersignale in einer bestimmten Kombination erhält.

Eine Fehlerreaktion kann insbesondere ein Ausgeben eines, insbesondere optischen und/oder akustischen, Warnsignals, ein Verfahren der Maschine in eine vorgegebene Stellung, ein Trennen von Antrieben von einer Energieversorgung und/oder ein Schließen von Bremsen und dergleichen umfassen.

Nach einem Aspekt der vorliegenden Erfindung ist das System zur Durchführung eines hier beschriebenen Verfahrens hard- und/oder softwaretechnisch eingerichtet.

Entsprechend weist in einer Ausführung der erste Kanal Mittel zum Vergleichen von ersten Vergleichs-Soll-Werten, die von von der Maschinensteuerung erhaltenen ersten Eingangs-Soll-Werten abhängen, insbesondere die ersten Eingangs-Soll-Werte sein können, und ersten Vergleichs-Ist-Werten, die von von der Maschinensteuerung erhaltenen ersten Eingangs-Ist-Werten abhängen, insbesondere die ersten Eingangs-Ist-Werte sein können, miteinander, und Mittel zum Auslösen einer Fehlerreaktion, falls eine Abweichung zwischen den ersten Vergleichs-Soll-Werten und ersten Vergleichs-Ist-Werten eine vorgegebene Toleranz übersteigt, auf, der zweite Kanal Mittel zum Vergleichen von ersten Vergleichs-Soll-Werten, die von von der Maschinensteuerung erhaltenen, insbesondere denselben, ersten Eingangs-Soll-Werten abhängen, insbesondere in gleicher Weise ermittelt werden wie im ersten Kanal, insbesondere die ersten Eingangs-Soll-Werte sein können, und ersten Vergleichs-Ist-Werten, die von von der Maschinensteuerung erhaltenen, insbesondere denselben, ersten Eingangs-Ist-Werten abhängen, insbesondere in gleicher Weise ermittelt werden wie im ersten Kanal, insbesondere die ersten Eingangs-Ist-Werte sein können, miteinander, und Mittel zum Auslösen einer, insbesondere derselben, Fehlerreaktion, falls eine Abweichung zwischen diesen ersten Vergleichs-Soll-Werten und ersten Vergleichs-Ist-Werten eine, insbesondere dieselbe, vorgegebene Toleranz übersteigt.

Die Maschinensteuerung weist entsprechend in einer Ausführung Mittel zum Ermitteln von Soll- und/oder Ist-Referenzpositionswerten einer maschinenfesten Referenz der Maschine auf Basis einer Transformation zwischen Referenzpositionswerten der maschinenfesten Referenz und Achspositionswerten der Maschine auf, wobei die ersten Eingangs-Soll- und -Ist-Werte diese Referenzpositionswerte und/oder erste und/oder höhere Zeitableitungen hiervon aufweisen.

In einer Ausführung weist der erste Kanal Mittel zum Vergleichen von zweiten Vergleichs-Soll-Werten, die von, insbesondere von der Maschinensteuerung erhaltenen, zweiten Eingangs-Soll-Werten abhängen, insbesondere die zweiten Eingangs-Soll-Werten sein können, und zweiten Vergleichs-Ist-Werten, die von, insbesondere einem Erfassungsmittel erhaltenen, zweiten Eingangs-Ist-Werten abhängen, insbesondere die zweiten Eingangs-Ist-Werten sein können, miteinander, und Mittel zum Auslösen einer Fehlerreaktion, falls eine Abweichung zwischen den zweiten Vergleichs-Soll-Werten und zweiten Vergleichs-Ist-Werten eine vorgegebene Toleranz übersteigt, auf, der zweite Kanal Mittel zum Vergleichen von zweiten Vergleichs-Soll-Werten, die von, insbesondere von der Maschinensteuerung erhaltenen, insbesondere denselben, zweiten Eingangs-Soll-Werten abhängen, insbesondere in gleicher Weise ermittelt werden wie im ersten Kanal, insbesondere die zweiten Eingangs-Soll-Werte sein können, und zweiten Vergleichs-Ist-Werten, die von, insbesondere von dem Erfassungsmittel erhaltenen und von diesem in redundanter Weise ermittelten, zweiten Eingangs-Ist-Werten abhängen, insbesondere in gleicher Weise ermittelt werden wie im ersten Kanal, insbesondere die zweiten Eingangs-Soll-Werte sein können, miteinander, und Mittel zum Auslösen einer, insbesondere derselben, Fehlerreaktion, falls eine Abweichung zwischen diesen zweiten Vergleichs-Soll-Werten und zweiten Vergleichs-Ist-Werten eine, insbesondere dieselbe, vorgegebene Toleranz übersteigt.

Die Maschinensteuerung weist entsprechend in einer Ausführung Mittel zum Ermitteln von Soll-Achspositionswerten der Maschine, die der erste und zweite Kanal von der Maschinensteuerung erhalten, auf Basis einer Transformation zwischen Referenzpositionswerten einer maschinenfesten Referenz und Achspositionswerten der Maschine auf, wobei die zweiten Eingangs-Soll- und -Ist-Werte diese Achspositionswerte und/oder erste und/oder höhere Zeitableitungen hiervon aufweisen.

In einer Ausführung weist die Maschinensteuerung Mittel zum Ermitteln erster und/oder zweiter Eingangs-Soll- und/oder -Ist-Werte auf Basis von in Antriebssteuerungen ermittelten Schleppfehlern auf, in einer anderen Ausführung weisen der erste und zweite Kanal jeweils Mittel zum Ermitteln erster und/oder zweiter Vergleichs-Soll- und/oder -Ist-Werte auf Basis von in Antriebssteuerungen ermittelten Schleppfehlern auf. Entsprechend weisen in einer Ausführung die Antriebssteuerungen Mittel zum Ermitteln eines Schleppfehlers auf.

Zusätzlich oder alternativ weist in einer Ausführung die Maschinensteuerung Mittel zum Ermitteln erster und/oder zweiter Eingangs-Soll- und/oder -Ist-Werte durch Zeitdifferentiation auf. Zusätzlich oder alternativ weisen in einer Ausführung der erste und zweite Kanal jeweils Mittel zum Ermitteln erster und/oder zweiter Vergleichs-Soll- und/oder -Ist-Werte durch Zeitdifferentiation auf.

In einer Ausführung weist das System Erfassungsmittel zum redundanten, insbesondere diversitären, Ermitteln zweiter Eingangs-Ist-Werte auf, die der erste und zweite Kanal erhalten.

In einer Ausführung weisen der erste und zweite Kanal jeweils Mittel zum Vergleichen von ersten und/oder zweiten Vergleichs-Soll-Werten und/oder ersten und/oder zweiten Vergleichs-Ist-Werten mit, insbesondere veränderlich, vorgegebenen Grenzwerten und Mittel zum Auslösen einer Fehlerreaktion, falls eine Abweichung eine vorgegebene Toleranz übersteigt, auf.

In einer Ausführung weist die Sicherheitssteuerung Mittel zum, insbesondere zyklischen, Durchführen eines Selbsttests und Auslösen einer Fehlerreaktion, falls der Selbsttest eine Fehlfunktion ergibt, auf.

In einer Ausführung weist die Sicherheitssteuerung sichere Eingänge zum Erhalt von externen Fehlersignalen und Mittel zum Auslösen einer Fehlerreaktion, falls sie ein externes Fehlersignal erhält, auf.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere die Maschine betreiben kann.

Weitere Vorteile und Merkmale ergeben sich aus den Unteransprüchen und den Ausführungsbeispielen. Hierzu zeigt, teilweise schematisiert:
- Fig. 1:: ein System einer Anordnung nach einer Ausführung der vorliegenden Erfindung; und
- Fig. 2:: ein Verfahren nach einer Ausführung der vorliegenden Erfindung.

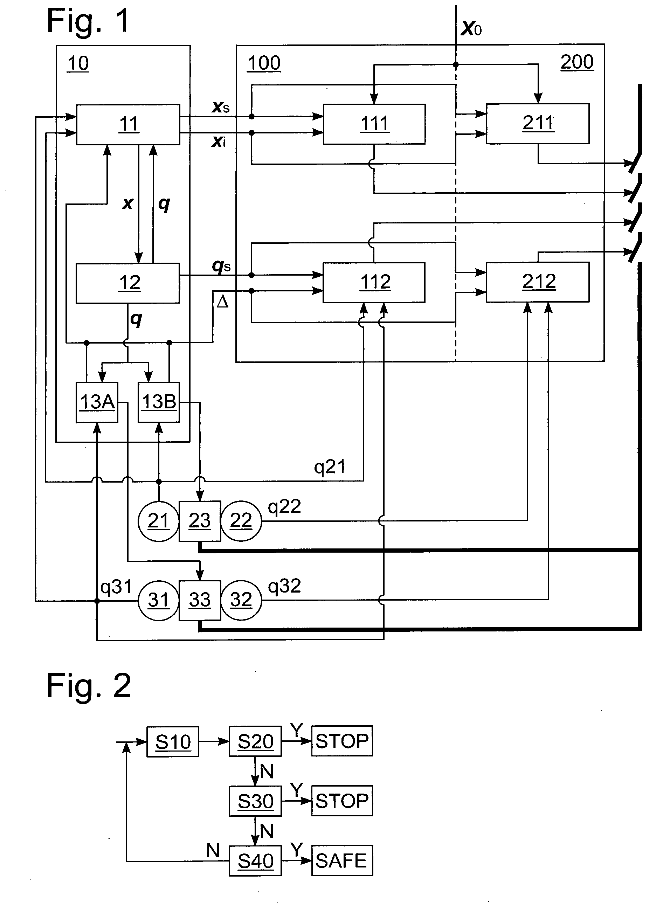

Fig. 1 zeigt eine Anordnung mit einem Roboter, von dem in Fig. 1 stellvertretend nur zwei Antriebe 23, 33 angedeutet sind, und einem System zum Betreiben dieses Roboters nach einer Ausführung der vorliegenden Erfindung, Fig. 2 ein Verfahren zum Betreiben dieses Roboters nach einer Ausführung der vorliegenden Erfindung, welches durch das hierzu soft- und hardwaretechnisch eingerichtete System durchgeführt wird.

Das System weist eine Maschinensteuerung 10 mit Antriebsreglern 13A, 13B auf, die die Antriebe 23, 33 steuern.

Das System weist weiter eine Sicherheitssteuerung mit einem ersten Kanal 100 und einen hierzu redundanten, insbesondere diversitären, zweiten Kanal 200 auf, die den Roboter überwachen.

In einem ersten Schritt S10 (vgl. Fig. 2) ermittelt ein Mittel 11 der Maschinensteuerung 10 auf Basis eines vorgegebenen Steuerprogramms, insbesondere mittels Bahnplanung und/oder Interpolation, Soll-Referenzpositionswerte ***x*** für den TCP des Roboters.

Aus diesen Soll-Referenzpositionswerten ***x*** für den TCP ermittelt ein Mittel 12 der Maschinensteuerung 10 auf Basis einer Rückwärts-Transformation zwischen Referenzpositionswerten des TCPs und Achspositionswerten Soll-Achspositionswerte ***q***, wie in Fig. 1 durch den Datenfluss 11-***x*→**12 angedeutet.

Alternativ kann in Schritt S10 das Mittel 11 die Soll-Referenzpositionswerte ***x*** für den TCP auch auf Basis einer Vorwärts-Transformation zwischen Referenzpositionswerten des TCPs und vorgegebenen Soll-Achspositionswerten ***q*** ermitteln, die beispielsweise durch manuelles Verfahren einer Achse des Roboters vorgegeben werden, wie in Fig. 1 durch den Datenfluss 12-***q***→11 angedeutet.

Der erste und zweite Kanal 100, 200 erhalten die Soll-Referenzpositionswerte für den TCP x als erste Eingangs-Soll-Werte ***x***ₛ und die Soll-Achspositionswerte ***q*** als zweite Eingangs-Soll-Werte ***q***ₛ. In einer Ausführung können die ersten Eingangs-Soll-Werte ***x***ₛ zusätzlich oder alternativ auch erste und/oder höhere Zeitableitungen der Soll-Referenzpositionswerte ***x*** umfassen. Zusätzlich oder alternativ können die zweiten Eingangs-Soll-Werte ***q***ₛ zusätzlich oder alternativ auch erste und/oder höhere Zeitableitungen der Soll-Achspositionswerte ***q*** umfassen.

Zusätzlich erhalten die Antriebsregler 13A, 13B von dem Mittel 12 die entsprechenden Komponenten der Soll-Achspositionswerte ***q**.*

Ein Erfassungsmittel weist im Ausführungsbeispiel exemplarisch je zwei Resolver 21, 22 bzw. 31, 32 pro Antrieb 23, 33 auf.

Der erste Resolver 21 ermittelt Ist-Achspositionswerte q21 für die Ist-Achsposition des Antriebs 23. Der zweite Resolver 22 ermittelt redundant Ist-Achspositionswerte q22 für die Ist-Achsposition des Antriebs 23. Der dritte Resolver 31 ermittelt Ist-Achspositionswerte q31 für die Ist-Achsposition des Antriebs 33. Der vierte Resolver 32 ermittelt redundant Ist-Achspositionswerte q32 für die Ist-Achsposition des Antriebs 33.

Der erste Kanal 100 erhält die Ist-Achspositionswerte q21, q31, der zweite Kanal 200 die redundant ermittelten Ist-Achspositionswerte q22, q32 als zweite Eingangs-Ist-Werte. In einer Ausführung können diese zweiten Eingangs-Ist-Werte zusätzlich oder alternativ auch erste und/oder höhere Zeitableitungen der Ist-Achspositionswerte umfassen.

Die Antriebsregler 13A, 13B erhalten ebenfalls je einen dieser Ist-Achspositionswerte q21 oder q22 bzw. q31 oder q32 und ermitteln hieraus Schleppfehler Δ zwischen den Soll- und Ist-Achspositionswerten. Auf Basis dieser Schleppfehler regeln sie die Antriebe 23, 33.

Der erste und zweite Kanal 100, 200 erhalten diese von den Antriebsreglern 13A, 13B ermittelten Schleppfehler Δ.

Das Mittel 11 erhält je einen der Ist-Achspositionswerte q21, q31 und den Schleppfehler Δ.

Auf Basis der Vorwärts-Transformation zwischen Referenzpositionswerten der maschinenfesten Referenz und Achspositionswerten ermittelt das Mittel 11 erste Eingangs-Ist-Werte ***x***ᵢ. Dabei ermittelt es diese Eingangs-Ist-Werte ***x***ᵢ auf Basis des Schleppfehlers Δ, indem es nicht die ermittelten Ist-Achspositionswerte q21, q31 selber vorwärts-transformiert, sondern ihnen vorab jeweils die entsprechende Komponente des Schleppfehlers Δ hinzuaddiert und diese Summe vorwärts-transformiert (***x***ᵢ = *T*·{[q21, q31,...] + Δ} mit der Vorwärts-Transformationsmatrix ***T***).

Der erste und zweite Kanal 100, 200 erhalten jeweils diese ersten Eingangs-Ist-Werte ***x***ᵢ. In einer Ausführung können die ersten Eingangs-Ist-Werte ***x***ᵢ zusätzlich oder alternativ auch erste und/oder höhere Zeitableitungen der Ist-Referenzpositionswerte ***x*** umfassen.

Somit erhalten in Schritt S10 der erste und zweite Kanal 100, 200 jeweils
- erste Eingangs-Soll-Werte ***x***ₛ,
- zweite Eingangs-Soll-Werte ***q***ₛ,
- erste Eingangs-Ist-Werte ***x***ᵢ und
- zweite Eingangs-Ist-Werte q21, q31 bzw. q22, q32 sowie
- Schleppfehler Δ.

In einem Schritt S20 vergleicht ein Mittel 111 des ersten Kanals 100 erste Vergleichs-Soll-Werte, die von den ersten Eingangs-Soll-Werten abhängen, und erste Vergleichs-Ist-Werte, die von den ersten Eingangs-Ist-Werten abhängen, miteinander. Im Ausführungsbeispiel entsprechen die ersten Vergleichs-Soll-Werte den ersten Eingangs-Soll-Werten ***x***ₛ und die ersten Vergleichs-Ist-Werte den ersten Eingangs-Ist-Werten ***x***ᵢ. In einer Abwandlung kann das Mittel 111 zusätzlich oder alternativ erste Vergleichs-Soll- und -Ist-Werte durch Zeitdifferentiation ermitteln, insbesondere, wenn die von dem Mittel 11 der Maschinensteuerung 10 erhaltenen ersten Eingangs-Soll- bzw. -Ist-Werte keine entsprechenden Zeitableitungen enthalten.

Falls eine Abweichung zwischen den ersten Vergleichs-Soll-Werten und ersten Vergleichs-Ist-Werten eine vorgegebene Toleranz übersteigt (S20: "Y"), löst das Mittel 111 des ersten Kanals 100 der Sicherheitssteuerung eine Fehlerreaktion aus, was in Fig. 1 durch eine Unterbrechung einer fett dargestellten Energieversorgung der Antriebe 23, 33 angedeutet ist.

Redundant hierzu vergleicht ein Mittel 211 des zweiten Kanals 200 erste Vergleichs-Soll-Werte, die in gleicher Weise von denselben ersten Eingangs-Soll-Werten abhängen wie im ersten Kanal, und erste Vergleichs-Ist-Werte, die in gleicher Weise von denselben ersten Eingangs-Ist-Werten abhängen wie im ersten Kanal, miteinander. Im Ausführungsbeispiel entsprechen somit auch diese ersten Vergleichs-Soll-Werte des zweiten Kanals den ersten Eingangs-Soll-Werten ***x***ₛ und diese ersten Vergleichs-Ist-Werte des zweiten Kanals den ersten Eingangs-Ist-Werten ***x***ᵢ. In einer Abwandlung kann entsprechend auch das Mittel 211 zusätzlich oder alternativ erste Vergleichs-Soll- und -Ist-Werte durch Zeitdifferentiation ermitteln, insbesondere, wenn die von dem Mittel 11 der Maschinensteuerung 10 erhaltenen ersten Eingangs-Soll- bzw. -Ist-Werte keine entsprechenden Zeitableitungen enthalten.

Falls eine Abweichung zwischen diesen ersten Vergleichs-Soll-Werten und ersten Vergleichs-Ist-Werten des zweiten Kanals 200 dieselbe vorgegebene Toleranz übersteigt (S20: "Y"), löst das Mittel 211 des zweiten Kanals 200 der Sicherheitssteuerung dieselbe Fehlerreaktion aus, was in Fig. 1 analog durch eine Unterbrechung der Energieversorgung der Antriebe 23, 33 angedeutet ist.

In einem Schritt S30 vergleicht ein Mittel 112 des ersten Kanals 100 zweite Vergleichs-Soll-Werte, die von den zweiten Eingangs-Soll-Werten ***q***ₛ abhängen, und zweite Vergleichs-Ist-Werte, die von den zweiten Eingangs-Ist-Werten q21, q31 abhängen, miteinander. Im Ausführungsbeispiel entsprechen die zweiten Vergleichs-Soll-Werte den zweiten Eingangs-Soll-Werten ***q***ₛ, während die zweiten Vergleichs-Ist-Werte auf Basis der zweiten Eingangs-Ist-Werten q21, q31 und des Schleppfehlers Δ ermittelt werden, indem diese addiert werden. In einer Abwandlung kann das Mittel 112 zusätzlich oder alternativ zweite Vergleichs-Soll- und -Ist-Werte durch Zeitdifferentiation ermitteln, insbesondere, wenn die von dem Mittel 12 der Maschinensteuerung 10 erhaltenen zweiten Eingangs-Soll- bzw. -Ist-Werte keine entsprechenden Zeitableitungen enthalten.

Falls eine Abweichung zwischen den zweiten Vergleichs-Soll-Werten und zweiten Vergleichs-Ist-Werten eine vorgegebene Toleranz übersteigt (S30: "Y"), löst das Mittel 112 des ersten Kanals 100 der Sicherheitssteuerung dieselbe Fehlerreaktion aus, was in Fig. 1 analog durch eine Unterbrechung der Energieversorgung angedeutet ist.

Redundant hierzu vergleicht ein Mittel 212 des zweiten Kanals 200 zweite Vergleichs-Soll-Werte, die in gleicher Weise von denselben zweiten Eingangs-Soll-Werten ***q***ₛ abhängen wie im ersten Kanal, und zweite Vergleichs-Ist-Werte, die in gleicher Weise von den redundant ermittelten zweiten Eingangs-Ist-Werten q22, q32 abhängen wie im ersten Kanal, miteinander. Im Ausführungsbeispiel entsprechen somit auch diese zweiten Vergleichs-Soll-Werte des zweiten Kanals den zweiten Eingangs-Soll-Werten ***q***ₛ, während diese zweiten Vergleichs-Ist-Werte des zweiten Kanals auf Basis der zweiten Eingangs-Ist-Werten q22, q32 und des Schleppfehlers Δ ermittelt werden, indem diese addiert werden. In einer Abwandlung kann das Mittel 212 zusätzlich oder alternativ zweite Vergleichs-Soll- und -Ist-Werte durch Zeitdifferentiation ermitteln, insbesondere, wenn die von dem Mittel 12 der Maschinensteuerung 10 erhaltenen zweiten Eingangs-Soll- bzw. -Ist-Werte keine entsprechenden Zeitableitungen enthalten.

Falls eine Abweichung zwischen diesen zweiten Vergleichs-Soll-Werten und zweiten Vergleichs-Ist-Werten eine vorgegebene Toleranz übersteigt (S30: "Y"), löst das Mittel 212 des zweiten Kanals 200 der Sicherheitssteuerung dieselbe Fehlerreaktion aus, was in Fig. 1 analog durch eine Unterbrechung der Energieversorgung angedeutet ist.

In einem Schritt S40 vergleichen der erste und zweite Kanal 100, 200 jeweils Vergleichs-Soll-Werte und/oder Vergleichs-Ist-Werte mit, insbesondere veränderlich, vorgegebenen Grenzwerten ***X***₀ und lösen dieselbe oder eine andere Fehlerreaktion aus, falls eine Abweichung zwischen den Vergleichs- und Grenzwerten eine vorgegebene Toleranz übersteigt (S40: "Y").

Exemplarisch ist hierzu in Fig. 1 angedeutet, dass die Mittel 111, 211 des ersten und zweiten Kanals 100, 200 beispielsweise einen zulässigen kartesischen Arbeitsraum ***X***₀ vorgegeben bekommen und die Vergleichs-Ist-Werte, die den vom Mittel 11 erhaltenen Ist-Referenzpositionswerten ***x***ᵢ entsprechen, mit diesem vergleichen und so bei Austritt des TCPs aus diesem vorgegebenen Arbeitsraum eine Fehlerreaktion auslösen, beispielsweise den Roboter in eine sichere Pose (Fig. 2: "SAFE") fahren oder dergleichen.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: Maschinensteuerung
- 11, 12: Mittel der Maschinensteuerung
- 13A, 13B: Antriebsregler
- 21, 22: Resolver
- 23: Antrieb
- 31, 32: Resolver
- 33: Antrieb
- 100: erster Kanal
- 111, 112: Mittel des ersten Kanals
- 200: zweiter Kanal
- 211, 212: Mittel des zweiten Kanals

## Patentansprüche

1. Verfahren zum Betreiben einer mehrachsigen Maschine, insbesondere eines Roboters, wobei
eine Maschinensteuerung (10) Antriebe (23, 33) der Maschine steuert; und
eine Sicherheitssteuerung, die einen ersten und einen hierzu redundanten, insbesondere diversitären, zweiten Kanal (100, 200) aufweist, die Maschine überwacht; wobei
der erste Kanal
erste Eingangs-Soll-Werte (***x***ₛ) und erste Eingangs-Ist-Werte (***x***ᵢ) von der Maschinensteuerung erhält (S10);
erste Vergleichs-Soll-Werte, die von den ersten Eingangs-Soll-Werten abhängen, und
erste Vergleichs-Ist-Werte, die von den ersten Eingangs-Ist-Werten abhängen, miteinander vergleicht (S20); und
eine Fehlerreaktion (STOP) auslöst, falls eine Abweichung zwischen den ersten Vergleichs-Soll-Werten und den ersten Vergleichs-Ist-Werten eine vorgegebene Toleranz übersteigt; und
der zweite Kanal
erste Eingangs-Soll-Werte (***x***ₛ) und erste Eingangs-Ist-Werte (***x***ᵢ) von der Maschinensteuerung erhält (S10);
erste Vergleichs-Soll-Werte, die von diesen ersten Eingangs-Soll-Werten abhängen, und
erste Vergleichs-Ist-Werte, die von diesen ersten Eingangs-Ist-Werten abhängen, miteinander vergleicht (S20); und
eine Fehlerreaktion (STOP) auslöst, falls eine Abweichung zwischen diesen ersten Vergleichs-Soll-Werten und diesen ersten Vergleichs-Ist-Werten eine vorgegebene Toleranz übersteigt;
wobei
die ersten Eingangs-Soll- und -Ist-Werte Referenzpositionswerte (***x***) einer maschinenfesten Referenz der Maschine und/oder erste und/oder höhere Zeitableitungen hiervon aufweisen und die Maschinensteuerung diese Soll- und/oder Ist-Referenzpositionswerte auf Basis einer Transformation zwischen Referenzpositionswerten der maschinenfesten Referenz und Achspositionswerten der Maschine ermittelt.

2. Verfahren nach Anspruch 1, **dadurch gekennzeichnet, dass** der erste Kanal
zweite Eingangs-Soll-Werte (***q***ₛ) und zweite Eingangs-Ist-Werte (q21, q31) erhält (S10);
zweite Vergleichs-Soll-Werte, die von den zweiten Eingangs-Soll-Werten abhängen,und
zweite Vergleichs-Ist-Werte, die von den zweiten Eingangs-Ist-Werten abhängen, miteinander vergleicht (S30); und
eine Fehlerreaktion (STOP) auslöst, falls eine Abweichung zwischen diesen zweiten Vergleichs-Soll-Werten und zweiten Vergleichs-Ist-Werten eine vorgegebene Toleranz übersteigt; und
der zweite Kanal
zweite Eingangs-Soll-Werte (***q***ₛ) und zweite Eingangs-Ist-Werte (q22, q32) erhält;
zweite Vergleichs-Soll-Werte, die von den zweiten Eingangs-Soll-Werten abhängen, und
zweite Vergleichs-Ist-Werte, die von den zweiten Eingangs-Ist-Werten abhängen, miteinander vergleicht (S30); und
eine Fehlerreaktion (STOP) auslöst, falls eine Abweichung zwischen diesen zweiten Vergleichs-Soll-Werten und zweiten Vergleichs-Ist-Werten eine vorgegebene Toleranz übersteigt;
wobei
die zweiten Eingangs-Soll- und -Ist-Werte Achspositionswerte (***q***) der Maschine und/oder erste und/oder höhere Zeitableitungen hiervon aufweisen.

3. Verfahren nach dem vorhergehenden Anspruch, **dadurch gekennzeichnet, dass** die Maschinensteuerung Soll-Achspositionswerte (***q***ₛ), die der erste und zweite Kanal von der Maschinensteuerung erhalten, auf Basis einer Transformation zwischen Referenzpositionswerten der maschinenfesten Referenz und Achspositionswerten der Maschine ermittelt.

4. Verfahren nach einem der vorhergehenden Ansprüche, **dadurch gekennzeichnet, dass** Eingangs- und/oder Vergleichs-Soll- und/oder -Ist-Werte auf Basis von in Antriebssteuerungen ermittelten Schleppfehlern (Δ) und/oder durch Zeitdifferentiation ermittelt werden.

5. Verfahren nach einem der vorhergehenden Ansprüche, **dadurch gekennzeichnet, dass** der erste und zweite Kanal von der Maschinensteuerung dieselben ersten und/oder zweiten Eingangs-Soll-Werte und/oder ersten Eingangs-Ist-Werte erhalten.

6. Verfahren nach einem der vorhergehenden Ansprüche, **dadurch gekennzeichnet, dass** der erste und zweite Kanal von einem Erfassungsmittel (21, 22, 31, 32) redudant ermittelte zweite Eingangs-Ist-Werte (q21, q22, q31, q32) erhalten.

7. Verfahren nach einem der vorhergehenden Ansprüche, **dadurch gekennzeichnet, dass** der erste und zweite Kanal jeweils Vergleichs-Soll-Werte und/oder Vergleichs-Ist-Werte mit, insbesondere veränderlich, vorgegebenen Grenzwerten (***X***₀) vergleichen (S40) und eine Fehlerreaktion (SAFE) auslösen, falls eine Abweichung eine vorgegebene Toleranz übersteigt.

8. Verfahren nach einem der vorhergehenden Ansprüche, **dadurch gekennzeichnet, dass** die Sicherheitssteuerung, insbesondere zyklisch, einen Selbsttest durchführt und eine Fehlerreaktion auslöst, falls der Selbsttest eine Fehlfunktion ergibt.

9. Verfahren nach einem der vorhergehenden Ansprüche, **dadurch gekennzeichnet, dass** die Sicherheitssteuerung eine Fehlerreaktion auslöst, falls sie ein externes Fehlersignal erhält.

10. System zum Betreiben einer mehrachsigen Maschine, insbesondere eines Roboters, mit
einer Maschinensteuerung (10) zum Steuern von Antrieben (23, 33) der Maschine; und
einer Sicherheitssteuerung zum Überwachen der Maschine, die einen ersten und einen hierzu redundanten, insbesondere diversitären, zweiten Kanal (100, 200) aufweist, wobei das System zur Durchführung eines Verfahrens nach einem der vorhergehenden Ansprüche eingerichtet ist.

11. Anordnung mit einem Roboter und einem System nach dem vorhergehenden Anspruch zum Betreiben dieses Roboters.

12. Computerprogrammprodukt mit einem Programmcode, der auf einem von einem Computer lesbaren Medium gespeichert ist, zur Durchführung eines Verfahrens nach einem der Ansprüche 1-9.

## Claims

1. A method of operating a multiple axis machine, in particular a robot, wherein
a machine control system (10) controls drives (23, 33) of the machine; and
a fail-safe control system, which comprises a first channel and a second channel (100, 200) redundant thereto, in particular a diversity channel, monitors the machine; wherein
the first channel
receives first input set point values (xₛ) and first input actual values (xᵢ) from the machine control system (S10);
compares first reference set point values, which depend on the first input set point values, and
first reference actual values, which depend on the first input actual values, with each other (S20); and
triggers a fault reaction (STOP) if a deviation between the first reference set point values and the first reference actual values exceeds a specified tolerance; and
the second channel
receives first input set point values (xₛ) and first input actual values (xᵢ) from the machine control system (S10);
compares first reference set point values, which depend on these first input set point values, and
first reference actual values, which depend on these first input actual values, with each other (S20); and
triggers a fault reaction (STOP) if a deviation between these first reference set point values and these first reference actual values exceeds a specified tolerance;
wherein
the first input set point values and the first input actual values comprise reference position values (x) of a reference of the machine which is fixed in relation to the machine and/or first and/or higher order derivatives thereof with respect to time, and the machine control system determines these reference set point position values and/or these reference actual position values on the basis of a transformation between reference position values of the reference which is fixed in relation to the machine and axial position values of the machine.

2. The method according to claim 1, **characterized in that**
the first channel
receives second input set point values (qₛ) and second input actual values (q21, q31) (S10);
compares second reference set point values, which depend on the second input set point values, and
second reference actual values, which depend on the second input actual values, with each other (S30); and
triggers a fault reaction (STOP) if a deviation between these second reference set point values and these second reference actual values exceeds a specified tolerance; and
the second channel
receives second input set point values (qₛ) and second input actual values (q22, q32);
compares second reference set point values, which depend on the second input set point values, and
second reference actual values, which depend on the second input actual values, with each other (S30); and
triggers a fault reaction (STOP) if a deviation between these second reference set point values and these second reference actual values exceeds a specified tolerance;
wherein
the second input set point values and the second input actual values comprise axial position values (q) of the machine and/or first and/or higher order derivatives thereof with respect to time.

3. The method according to the preceding claim, **characterized in that** the machine control system determines axial position set point values (qₛ), which the first and second channel receive from the machine control system, on the basis of a transformation between reference position values of the reference which is fixed in relation to the machine and axial position values of the machine.

4. The method according to any one of the preceding claims, **characterized in that** input and/or reference set point and/or actual values are determined on the basis of lag errors (Δ) determined in the drive control units and/or by differentiation with respect to time.

5. The method according to any one of the preceding claims, **characterized in that** the first and second channel receive the same first and/or second input set point values and/or first input actual values from the machine control system.

6. The method according to any one of the preceding claims, **characterized in that** the first and second channel receive redundantly determined second input actual values (q21, q22, q31, q32) from an acquisition means (21, 22, 31, 32).

7. The method according to any one of the preceding claims, **characterized in that** the first and second channel, respectively, compare (S40) reference set point values and/or reference actual values with specified threshold values (X₀), in particular variable ones, and trigger a fault reaction (SAFE) if a deviation exceeds a specified tolerance.

8. The method according to any one of the preceding claims, **characterized in that** the fail-safe control system carries out a self-test, in particular cyclically, and triggers a fault reaction if the self-test reveals a malfunction.

9. The method according to any one of the preceding claims, **characterized in that** the fail-safe control system triggers a fault reaction if it receives an external error signal.

10. A system for operating a multiple axis machine, in particular a robot, with
a machine control system (10) for controlling drives (23, 33) of the machine; and
a fail-safe control system for monitoring the machine, which comprises a first channel and a second channel (100, 200) which is redundant thereto, in particular a diversity channel, wherein the system is arranged for carrying out the method according to any one of the preceding claims.

11. An arrangement comprising a robot and a system according to the preceding claim for operating this robot.

12. A computer program product with a program code, which is stored on a machine-readable storage medium, for carrying out a method according to any one of the claims 1 to 9.

## Revendications

1. Procédé de fonctionnement d'une machine multiaxiale, en particulier d'un robot, dans lequel
une commande de machine (10) commande des entraînements (23, 33) de la machine ; et
une commande de sécurité, qui présente un premier et un deuxième canal en particulier diversitaire, redondant à celui-ci (100, 200), qui surveille la machine, dans lequel
le premier canal
reçoit des premières valeurs de consigne d'entrée (x_{S}) et des premières valeurs réelles d'entrée (x_{I}) de la commande de machine (S10) ;
compare l'une à l'autre des premières valeurs de consigne de comparaison, qui dépendent des premières valeurs de consigne d'entrée, et
des premières valeurs réelles de comparaison, qui dépendent des premières valeurs réelles d'entrée (S20) ; et
déclenche une réaction d'erreur (STOP), si un écart entre les premières valeurs de consigne de comparaison et les premières valeurs réelles de comparaison excède une tolérance prédéfinie ; et
le deuxième canal
reçoit des premières valeurs de consigne d'entrée (x_{S}) et des premières valeurs réelles d'entrée (x_{I}) de la commande de machine (S10) ;
compare l'une à l'autre des premières valeurs de consigne de comparaison, qui dépendent de ces premières valeurs de consigne d'entrée, et
des premières valeurs réelles de comparaison, qui dépendent de ces premières valeurs réelles d'entrée (S20) ; et
déclenche une réaction d'erreur (STOP), si un écart entre ces premières valeurs de consigne de comparaison et ces premières valeurs réelles de comparaison excède une tolérance prédéfinie ;
dans lequel
les premières valeurs de consigne et réelles d'entrée présentent des valeurs de position de référence (x) d'une référence fixe de machine de la machine et/ou des premières dérivées de temps et/ou des dérivées de temps supérieures de celles-ci et la commande de machine détermine ces valeurs de position de référence de consigne et/ou réelles sur la base d'une transformation entre des valeurs de position de référence de la référence fixe de machine et des valeurs de position d'axe de la machine.

2. Procédé selon la revendication 1, **caractérisé en ce que**
le premier canal
reçoit des deuxièmes valeurs de consigne d'entrée (q_{S}) et des deuxièmes valeurs réelles d'entrée (q21, q31) (S10) ;
compare l'une à l'autre des deuxièmes valeurs de consigne de comparaison, qui dépendent des deuxièmes valeurs de consigne d'entrée, et
des deuxièmes valeurs réelles de comparaison, qui dépendent des deuxièmes valeurs réelles d'entrée (S30) ; et
déclenche une réaction d'erreur (STOP), si un écart entre ces deuxièmes valeurs de consigne de comparaison et deuxièmes valeurs réelles de comparaison excède une tolérance prédéfinie ; et
le deuxième canal
reçoit des deuxièmes valeurs de consigne d'entrée (q_{S}) et des deuxièmes valeurs réelles d'entrée (q22, q32) ;
compare l'une à l'autre des deuxièmes valeurs de consigne de comparaison, qui dépendent des deuxièmes valeurs de consigne d'entrée, et
des deuxièmes valeurs réelles de comparaison, qui dépendent des deuxièmes valeurs réelles d'entrée (S30) ; et
déclenche une réaction d'erreur (STOP), si un écart entre ces deuxièmes valeurs de consigne de comparaison et deuxièmes valeurs réelles de comparaison excède une tolérance prédéfinie ;
dans lequel
les deuxièmes valeurs de consigne et réelles d'entrée présentent des valeurs de position d'axe (q) de la machine et/ou des premières dérivées de temps et/ou des dérivées de temps supérieures de celles-ci.

3. Procédé selon la revendication précédente, **caractérisé en ce que** la commande de machine détermine des valeurs de position d'axe de consigne (q_{S}), qui reçoivent le premier et deuxième canal de la commande de machine, sur la base d'une transformation entre des valeurs de position de référence de la référence fixe de machine et des valeurs de position d'axe de la machine.

4. Procédé selon l'une quelconque des revendications précédentes, **caractérisé en ce que** des valeurs de consigne et/ou réelles de comparaison et/ou d'entrée sont déterminées sur la base d'erreurs de poursuite (Δ) déterminées dans des commandes d'entraînement et/ou par différenciation temporelle.

5. Procédé selon l'une quelconque des revendications précédentes, **caractérisé en ce que** le premier et deuxième canal reçoivent les mêmes premières et/ou deuxièmes valeurs de consigne d'entrée et/ou premières valeurs réelles d'entrée de la commande de machine.

6. Procédé selon l'une quelconque des revendications précédentes, **caractérisé en ce que** le premier et deuxième canal reçoivent des deuxièmes valeurs réelles d'entrée (q21, q22, q31, q32) déterminées de manière redondante d'un moyen de détection (21, 22, 31, 32).

7. Procédé selon l'une quelconque des revendications précédentes, **caractérisé en ce que** le premier et deuxième canal comparent respectivement des valeurs de consigne de comparaison et/ou des valeurs réelles de comparaison avec des valeurs limites (X₀) prédéfinies, en particulier modifiables (S40) et déclenchent une réaction d'erreur (SAFE), si un écart excède une tolérance prédéfinie.

8. Procédé selon l'une quelconque des revendications précédentes, **caractérisé en ce que** la commande de sécurité effectue un autotest, en particulier de manière cyclique, et déclenche une réaction d'erreur, si l'autotest donne un dysfonctionnement.

9. Procédé selon l'une quelconque des revendications précédentes, **caractérisé en ce que** la commande de sécurité déclenche une réaction d'erreur, si elle reçoit un signal d'erreur externe.

10. Système de fonctionnement d'une machine multiaxiale, en particulier d'un robot, avec
une commande de machine (10) pour la commande d'entraînements (23, 33) de la machine ; et
une commande de sécurité pour la surveillance de la machine, qui présente un premier et un deuxième canal, en particulier diversitaire, redondant à celui-ci (100, 200), dans lequel le système est aménagé pour la réalisation d'un procédé selon l'une quelconque des revendications précédentes.

11. Agencement avec un robot et un système selon la revendication précédente pour le fonctionnement de ce robot.

12. Produit de programme d'ordinateur avec un code de programme, qui est enregistré sur un support lisible par un ordinateur, pour la réalisation d'un procédé selon l'une quelconque des revendications 1-9.
